# EUROPÄISCHE PATENTSCHRIFT

(11) **EP 0 616 874 B1**
(45) Veröffentlichungstag und Bekanntmachung des Hinweises auf die Patenterteilung: **10.09.1997**
(21) Anmeldenummer: 94104270.7
(22) Anmeldetag: 18.03.1994
(51) Int. Cl.: B25J 15/06, B25J 15/04

(54) **Robotarm eines Flächenportalroboters**
Robot arm for a portal robot
Bras de robot pour robot à portique

(30) Priorität: 24.03.1993 DE 4309539; 04.03.1994 DE 4407324
(43) Veröffentlichungstag der Anmeldung: 28.09.1994
(73) Patentinhaber: Hauni Maschinenbau Aktiengesellschaft, D-21033 Hamburg (DE)
(72) Erfinder: Fink, Friedhelm, D-65232 Taunusstein (DE); Panthel, Klaus, D-65232 Taunusstein (DE); Fuchs, Hans-Werner, D-95349 Thurnau (DE)

(56) Entgegenhaltungen:
- EP-A- 0 396 210
- DE-A- 3 740 995
- FR-A- 2 554 043

## Beschreibung

Die Erfindung betrifft einen Robotarm eines Flächenportalroboters zum Erfassen von banderolierten Stapeln flacher Kartonzuschnitte der im Oberbegriff den Anspruchs 1 beschriebenen Gattung.

Flächenportalroboter werden z.B. bei der Ver- und Entsorgung von Bobinenwechslern bei der Cigarettenherstellung sowie bei der Handhabung von banderolierten gestapelten flachen Kartonzuschnitten eingesetzt, die von Paletten aufzunehmen und einer Packmaschine zuzuführen sind.

Aus der deutschen Offenlegungsschrift DE 33 44 903 ist eine Greiferanordnung für einen Industrieroboter bekannt, bei der am Roboterarm ein schwenkbarer Doppelarm befestigt ist, der an den Enden über Schnellkupplungen mit Spezialgreifern zur Handhabung von Leiterplatten und Folien verbunden ist. Dieser Robotarm weist nachteiligerweise keine Untergreifvorrichtung auf, hält also die Leiterplatte nur durch Ansaugen, und ist deshalb für schnelle Bewegungen ungeeignet, da die Gefahr des Ablösens der Leiterplatte besteht, wenn die Beschleunigungskräfte die Ansaugkräfte übersteigen. Weiterhin nachteilig wirkt sich aus, daß der Arm selbst nicht zur Aufnahme von Transportgegenständen geeignet ist, sondern für jeden Zweck einen Spezialgreifer aufnehmen muß.

Weiter ist aus der deutschen Offenlegungsschrift DE 35 02 182 eine Vorrichtung zur Feineinstellung der Greifer eines Roboters mit einer Untergreifvorrichtung bekannt, welche zwischen einer Ruhelage und einer Arbeitslage mittels eines Gestänges schwenkbar ist. Diese Greifeinrichtung greift die Gegenstände im wesentlichen von der Seite, wozu nachteiligerweise ein gewisser Freiraum um gestapelte aufzunehmende Teile zu schaffen ist. Außerdem ist eine komplizierte separate Betätigung für den Untergreifer notwendig.

Eine weitere Einrichtung zum Beschicken von Verpackungsmaschinen mit Bogenstapeln wird in der deutschen Offenlegungsschrift DE 40 28 150 vorgeschlagen. Ungeeigneterweise kann diese Einrichtung jedoch lediglich ganze Reihen von Nutzstapeln erfassen und ist wegen ihres speziell konstruierten Aufnahmeteils nur für den Transport sehr spezieller Gegenstände brauchbar.

Eine gattungsgemäße Vorrichtung zum Zuführen von banderolierten Stapeln eines bogenförmigen Materials, z.B. von Päckchenzuschnitten zu Verpackungsmaschinen, ist aus der europäischen Patentschrift Nr. 0 411 523 bekannt. Diese Vorrichtung weist einen Arbeitskopf auf, der mit Greifalementen zum Greifen der Zuschnitt-Stapel versehen ist. Im Ausführungsbeispiel wird eine pneumatische Saugvorrichtung beschrieben, welche die banderolierten Stapel aufnimmt, so daß sie mit Hilfe einer Untergreifvorrichtung fixiert und dadurch sehr rasch bewegt werden können.

Der Nachteil dieser Vorrichtung liegt wiederum darin, daß ein spezieller Arbeitskopf für die Aufnahme von Zuschnitt-Stapeln und für die Untergreifvorrichtung speziell anzubringende Betätigungseinrichtungen notwendig sind. Damit ist für dieses Handling ein Roboter notwending, der nur bedingt Zusatzaufgaben wahrnehmen kann.

Es ist die Aufgabe der vorliegenden Erfindung, einen Robotarm eines Flächenportalroboters zur Verfügung zu stellen, der die Nachteile des Standes der Technik nicht mehr aufweist, insbesondere ohne aufwendige Umrüstung des Arbeitskopfes verschiedenartige Gegenstände sicher aufnehmen kann, einen schnellen und flexiblen Transport der Gegenstände sicherstellt sowie eine einfache Betätigung der verstellbaren Bauteile am Arbeitskopf gestattet.

Diese Aufgabe wird durch die im des Anspruch 1 beschriebenen Merkmale eines Flächenportalroboters gemäß der vorliegenden Erfindung gelöst.

Der besondere Vorteil des erfindungsgemäßen Robotarms liegt in der Art und Weise der mechanischen Kopplung zwischen dem Arbeitskopf und dem hiervon trennbaren Werkzeug zum Erfassen der banderolierten Stapel der Kartonzuschnitte. Zunächst besteht nämlich die Möglichkeit, einen üblichen, mit einem Mehrbackenfutter versehenen Arbeitskopf zur Aufnahme und Fixierung des Werkzeugs zu verwenden, indem eine Zylinderfläche des Werkzeugs mit dem Mehrbackenfutter in Eingriff kommt.

Der vorgeschlagene Flächenportalroboter kann andererseits mit dem Mehrbackenfutter seines Arbeitskopfes vor der Aufnahme oder nach der Ablage dieses Werkzeugs jederzeit Gegenstände aufnehmen, welche eine geeignete Zylinderfläche aufweisen, z.B. Bobinen mit Cigaretten- oder Belagpapier.

Auf diese Art besteht mit dem erfindungsgemäßen Flächenportalroboter nunmehr die Möglichkeit, ohne eine umfassende Umrüstung auf ein anderes Greifwerkzeug durch den Arbeitskopf selbst verschiedenartige, geeignete Flächen aufweisende Materialien zu transportieren, was die Einsatzfähigkeit eines solchen Roboters wesentlich erhöbt, da Werkzeuggreifzeiten und Umrüstzeiten eingespart werden können. Weiterhin kann jedes mit einer vom Mehrbackenfutter greifbaren Fläche ausgestattete weitere Werkzeug aufgenommen werden, wodurch sich die Einsatzflexibilität dieses Flächenportalroboters weiter steigern läßt.

Der Arbeitskopf eines solchen Flächenportalroboters, welcher auch Gegenstände mit zylinderförmigen Flächen aufnehmen und transportieren kann, ist zum Abschieben dieser Gegenstände, wie z.B. Papier-Bobinen, schon mit einer parallel zur Arbeitskopfachse bewegbaren Schubvorrichtung ausgestattet. Ein weiterer großer Vorteil des hier vorgeschlagenen Flächenportalroboters liegt deswegen darin, daß eine solche, zum Abschieben von z.B. Bobinen vorgesehene Schubvorrichtung nach der Kopplung des Arbeitskopfes mit dem Werkzeug zur Betätigung der Untergreifvorrichtung dieses Werkzeugs verwendet werden kann.

Es sind also vorteilhafterweise keine weiteren Betätigungsmechanismen für die Untergreifvorrichtung am Arbeitskopf vorzusehen, da diese schon in Gestalt der Schubvorrichtung vorhanden sind.

Weiterhin können bei der Aufnahme des Werkzeugs auf einfache Weise mittels Steckkupplungen die Anschlüsse der Saugvorrichtung mit einer Unterdruckquelle verbunden werden.

Durch die Unteransprüche werden bevorzugte Ausführungsformen und Ausgestaltungen des erfindungsgemäßen Robotarms beschrieben.

So besteht die Möglichkeit, ein Mehrbackenfutter am Arbeitskopf zu verwenden, welches dort bereits vorhanden und für die Aufnahme von Bobinen vorgesehen ist, indem es die zylindrische Innenfläche im Zentrum der Bobinen von innen her greift.

Vorteilhafterweise muß bei dieser Konstruktion die aufzugreifende Fläche des Werkzeuges lediglich als einfach herzustellende Innenzylinderfläche mit in der Zylinderfläche im wesentlichen gleichen Abmaßen wie die Bobinenkerne ausgestaltet werden.

In bevorzugter Ausgestaltung des Robotarms ist die die Untergreifvorrichtung des Werkzeugs betätigende Schubvorrichtung eine am Arbeitskopf zum Ausstoßen von Bobinen vorgesehene Ausschieberbrille. Solche Ausschieberbrillen eignen sich in ihrer Form und Ausgestaltung gut zum Betätigen von Hebelvorrichtungen und finden somit eine sehr geeignete Zweitverwendung, wodurch auch Steuerungs- und Antriebseinheiten der Ausschieberbrille, die bereits vorhanden sind, diesem weiteren Zweck dienen können.

Bevorzugt kann die mechanische Kopplung des Arbeitskopfes mit dem Werkzeug durch einen form- und/oder kraftschlüssigen Eingriff zwischen dem Mehrbackenfutter, insbesondere einem Dreibackenfutter, und einem Hohlzylinder am Werkzeug erfolgen.

Insbesondere durch die form- und kraftschlüssige Verbindung der beiden Bauteile kann die Sicherheit der Verbindung zwischen Mehrbackenfutter und Werkzeug noch besser gewährleistet werden. So liefert z.B. der Eingriff eines an der Außenfläche des Mehrbackenfutters angebrachten Ringvorsprungs in eine in der Innenfläche des Werkzeughohlzylinders ausgebildete Ringnut eine sehr gute Betriebssicherheit gegen Abrutschen des Werkzeugs.

Es besteht die Möglichkeit, den Robotarm so auszugestalten, daß das Werkzeug einen an einer Grundplatte befestigten Spann- und Zentrierring mit mindestens zwei Zentrierstiften aufweist, und daß die Grundplatte an einer die Hebelvorrichtung zur Betätigung der Untergreifvorrichtung aufnehmenden Konsole befestigt ist.

Durch diese vorbeschriebene Ausgestaltung wird eine einfach ausgeführte Zentrierung des Werkzeugs am Arbeitskopf möglich, wodurch die genaue Einführung der Steckkupplungen ebenfalls gewährleistet ist. Die Grundplatte kann dabei vorteilhafterweise gleichzeitig als Befestigung der Konsole verwendet werden, welche die Untergreifvorrichtung und die sie betätigende Hebelvorrichtung aufnimmt.

Vorteilhafterweise weist die am Werkzeug befestigte Saugvorrichtung elastisch mit einem Spiel von etwa 15 mm gelagerte Saugköpfe auf.

Die Verwendung von Saugköpfen ist eine bewährte Art der pneumatischen Verbindung. Durch die flexible Lagerung der Saugköpfe besteht die Möglichkeit, Unregelmäßigkeiten in der Auflagefläche der pneumatisch zu erfassenden und zu transportierenden Stapel sowie durch schräges Aufsetzen der Saugvorrichtung entstehende Ansaugprobleme auszugleichen. Außerdem wird ein gleichzeitiges Greifen von mehreren Stapeln ermöglicht.

Eine vorteilhafte Ausgestaltung des erfindungsgemäßen Robotarms besteht darin, die Saugvorrichtung zur Aufnahme von drei Stapeln von Kartonzuschnitten mit drei jeweils mit Steckkupplungen versehenen Saugplatten mit jeweils mehreren Saugköpfen auszustatten, die einzeln durch Unterdruck ansteuerbar sind.

Die Arbeitsgeschwindigkeit des Robotarms sowie die Fördermenge können naturgemäß durch den Einsatz von drei Saugplatten vergrößert werden. Durch die unabhängige einzelne Ansteuerbarkeit der Saugplatten durch Unterdruck wird die Saugvorrichtung auch beim Ausfall einer einzelnen Saugplatte noch effektiv mittels der beiden unabhängig angesteuerten anderen Platten arbeiten können. Ebenso können, falls nur die Aufnahme von weniger als drei Stapeln erforderlich ist, die verbleibenden Saugplatten abgeschaltet werden. Durch das gleichzeitige Greifen von drei Stapeln wird Zeit für den Roboter gewonnen, andere Materialien zu handhaben.

Bei der obigen Ausgestaltung ist es sinnvoll, zum Untergreifen der drei Stapel von Kartonzuschnitten für jeden Stapel jeweils eine Untergreifvorrichtung am Werkzeug vorzusehen. Die Vorteile einzeln ansteuerbarer Untergreifvorrichtungen entsprechen denjenigen einzeln ansteuerbarer Saugplatten, wobei einzelne Untergreifvorrichtungen zusätzlich noch die Möglichkeit bieten, die Lücken zwischen den unteren Teilen der Untergreifvorrichtungen dazu zu nutzen, die drei Kartonstapel auf einem Hubtisch abzuladen, der über ein Ablageband ausfahrbare Absetzkolben aufweist, wodurch die Untergreifvorrichtungen nach der Ablage zwischen den Absetzkolben nach unten weggefahren werden können.

Die Ausführungsform des Robotarms zur Aufnahme von drei Stapeln von Kartonzuschnitten kann noch dadurch verbessert werden, daß entsprechend der Größe der zu handhabenden Stapel die Saugplatten und die Untergreifvorrichtungen gegeneinander horizontal verschiebbar sind. Die Auswirkungen unterschiedlicher Größen und Anordnungen der Stapel werden somit für den Betrieb unkritisch.

Die Untergreifvorrichtung eines erfindungsgemäßen Robotarms kann bevorzugt auf einer an der Konsole drehbar gelagerten Betätigungswelle sitzen, die über ein Zahnradvorgelege mit einer Schubstange gekoppelt ist, die wiederum an einen Betätigungshebel angelenkt ist. Diese einfache Konstruktion erlaubt eine genaue Ansteuerung der Untergreifvorrichtung und ein optimales Zusammenwirken mit der als Betätigungsvorrichtung für die Untergreifvorrichtung vorgesehenen Schubvorrichtung, z.B. einer Ausschieberbrille für Bobinen.

Vorteilhafterweise weist der Betätigungshebel an seinem freien Ende eine Rolle auf, über welche er von der Schubvorrichtung, die parallel zur Längsachse des Robotarms verschiebbar ist, betätigt wird, wodurch die Untergreifvorrichtung aus der Ruhelage in die Arbeitslage bewegbar ist, in welcher die Rolle auf der Grundplatte anliegt.

Der Einsatz der Rolle am freien Ende des Betätigungshebels bewirkt eine reibungslose Führung des freien Endes bei der Betätigung der Untergreifvorrichtung, während die Grundplatte beim Anschlag der Rolle gleichzeitig vorteilhafterweise die Bewegung der Untergreifvorrichtung in der richtigen Winkelposition anhält.

In einer bevorzugten Ausführungsform des vorgeschlagenen Robotarmes umfaßt das Zahnradvorgelege ein Zahnrad, welches mit einem auf der Betätigungswelle sitzenden zweiten Zahnrad kämmt und mit der Schubstange verbunden ist.

Der Einsatz der Zahnräder ermöglicht eine genaue und einstellbare Umwandlung der Längsbewegung der Betätigungswelle in eine Drehbewegung für die Untergreifvorrichtung.

Die Untergreifvorrichtung kann eine einfach herzustellende rechteckige Platte sein, welche eine gute Auflage und ein verdrehfreies Halten der zu transportierenden Stapel gewährleistet.

Die Erfindung wird nachfolgend an einem Ausführungsbeispiel anhand der beigefügten Zeichnungen näher erläutert. Es zeigen:
- Fig. 1: eine perspektivische Aufsicht auf einen typischen Arbeitsbereich eines Flächenportalroboters in einem Cigarettenherstellungsaggregat,
- Fig. 2: eine Seitenansicht eines Flächenportalroboters beim Transport von Kartonzuschnittstapeln von einer Palette zu einem Ablageband,
- Fig. 3: eine perspektivische Aufsicht auf einen Flächenportalroboter mit dessen Arbeitsbereich,
- Fig. 4: einen vertikalen Teilschnitt eines mit einem Werkzeug verbundenen Arbeitskopfes sowie der Untergreifvorrichtung,
- Fig. 5: den Arbeitskopf gemäß Figur 3 beim Abschieben einer Bobine;
- Fig. 6: den Arbeitskopf des Flächenportalroboters mit dem Werkzeug beim Ablegen eines Kartonzuschnittstapels auf einem Hubtisch.

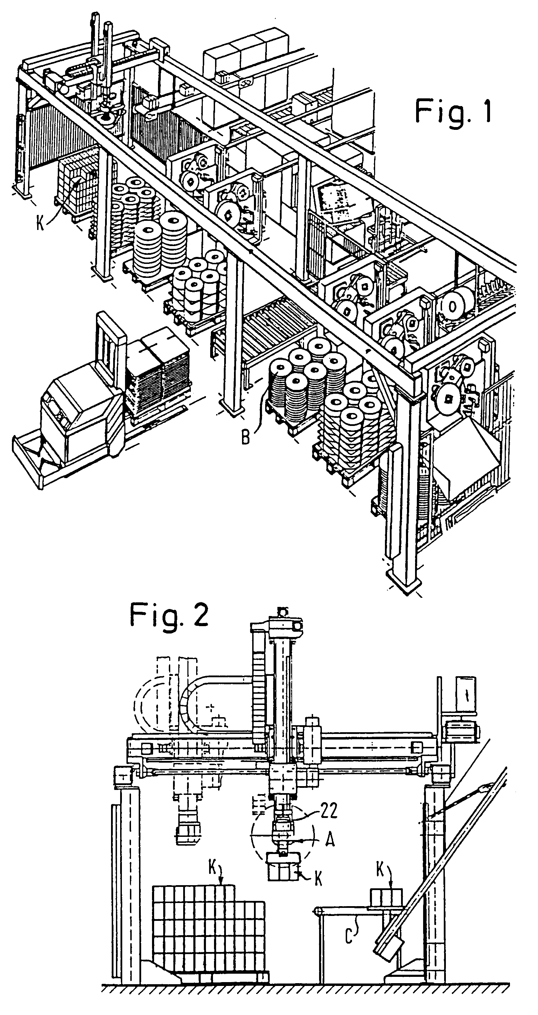

Aus der Figur 1, die einen typischen Arbeitsbereich eines Flächenportalroboters in einem Cigarettenherstellungsaggregat zeigt, wird grundsätzlich ersichtlich, wie verschiedene Verbrauchsmaterialien im Arbeitsbereich des Flächenportalroboters auf Paletten gestapelt gelagert sind, die von einem fahrerlosen Transportsystem abgestellt werden. Der am linken hinteren Ende dargestellte Flächenportalroboter muß in der Lage sein, sowohl Kartonzuschnittstapel K als auch Bobinenstapel B zu entstapeln und zur Weiterverarbeitung der zugehörigen Packmaschine zuzuführen. Dabei kann der Zuschnittstapel Hinge-Lid-Zuschnitte (HLZ) enthalten, aus denen Hinge-Lid-Cigarettenschachteln gefaltet werden.

Wie weiterhin der in Fig. 2 gezeigten Darstellung zu entnehmen ist, die einen Flächenportalroboter mit seinem Arbeitskopf 22 und dem aufgenommenen Werkzeug A beim Transport von drei Kartonzuschnittstapeln K von einer Palette auf ein Ablageband C zeigt, sind alle Arbeitsmittel im Arbeitsbereich des Arbeitskopfes des Flächenportalroboters angeordnet, wobei ein schräg nach oben verlaufendes Förderband die abgestapelten Kartonzuschnitte K der weiteren Verarbeitung in der Packmaschine zuführt.

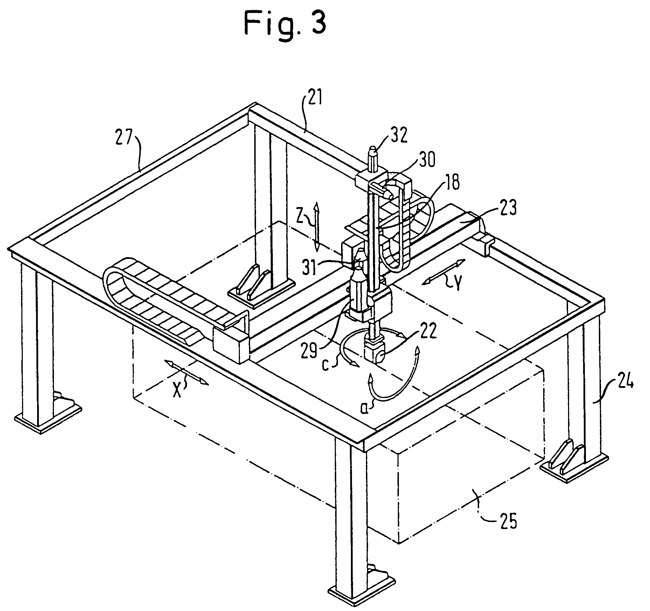

Ein Flächenportalroboter, wie ihn Fig. 3 zeigt, weist vier oder mehr (je nach Verfahrlänge) Ständer 24 auf, die einen Rahmen abstützen, der aus zwei gegenüberliegenden Tragrahmen 27 und diese beiden Tragrahmen verbindenden gegenüberliegenden zwei Fahrträgern 21 besteht. Auf den Fahrträgern 21 sind die gegenüberliegenden Enden eines Querportals 23 verfahrbar gelagert, das einen Robotarm 18 trägt, der seinerseits an seinem Arbeitskopf 22 ein Werkzeug aufnehmen kann und mit Antrieben 29, 30, 31, 32 versehen ist, mit denen der Arbeitskopf in X-, Y- und Z-Richtung sowie um eine c- und eine a-Achse bewegbar ist.

Die gesonderten Antriebe für die X-, Y- und Z-Achse sowie für die Drehachsen c und a erlauben es dem Robotarm 18, mit seinem Arbeitskopf 22 jeden Punkt des in Fig. 3 mit einer Strichpunkt-Linie angedeuteten Arbeitsbereiches 25 zu erreichen, in welchem Paletten in einer bestimmten Ordnung positioniert sind (siehe Fig. 1), welche die zu transportierenden Verbrauchsmaterialien aufnehmen, die zum Herstellen und Verpacken von Cigaretten in Päckchen und zum Verpacken der Cigarettenpäckchen in "Stangen" erforderlich sind. Mit dieser Flexibilität des Roboters bezüglich seiner Bewegung in und um die angegebenen Achsrichtungen können in Verbindung mit der Auswahl unterschiedlicher Werkzeuge, die an einer geeigneten Stelle des Arbeitsbereiches 25 abgelegt sein können, vielfältige Greiffunktionen erfüllt werden. Das Aufspannen verschiedener Haltevorrichtungen bzw. Greifer an dem Arbeitskopf des Robotarms 18 ist durch Drehen um die a-Achse möglich. So können z.B. volle Bobinen mit Hilfe eines Dreibackenfutters eines Futtergreifers am Innendurchmesser ihres Kerns ergriffenen werden und exakt in eine gewünschte Position zur Weiterverarbeitung transportiert werden. Ein Greifen leerer Bobinenkerne ist z.B. mittels eines Parallelgreifers von außen möglich.

Zum Greifen der HLZ-Stapel K wird ein Werkzeug mit zusätzlicher Untergreiffunktion eingesetzt.

Damit diese HLZ-Stapel sicher ergriffen werden und sich beim Weitertransport nicht gegeneinander verschieben können, sind sie vorgespannt von einer Banderole aus Papier umgeben. Das Banderolenpapier ist relativ luftundurchlässig und reißfest. Dieses wird mit einer einfachen Dispersionsbeschichtung erreicht, die die Recyclingfähigkeit des Papiers nicht beeinträchtigt.

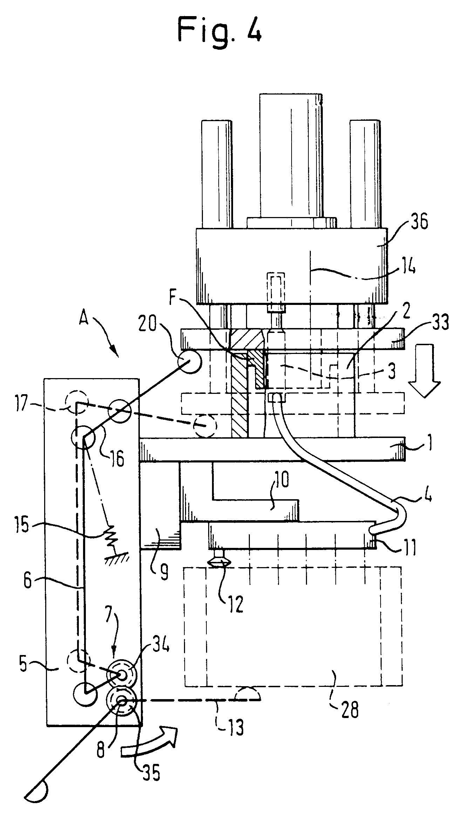

Zum Ergreifen und Transportieren dieser HLZ-Stapel ist ein Werkzeug vorgesehen, welches im Teilschnitt in Fig. 4 dargestellt ist und eine Untergreifvorrichtung 13 und Saugplatten an einer Konsole 10 aufweist.

Vor dem HLZ-Transfer befindet sich das Werkzeug A in dem Arbeitsbereich 25 in einer Ablage mit entsprechender Lagesicherung und Platzüberwachung. Zum Ergreifen des Werkzeugs durch den Roboter mit Hilfe des an seinem Arbeitskopf 22 vorgesehenen Mehrbackenfutters ist ein entsprechender Befehl von der Zentralsteuereinheit des Roboters erforderlich. Nach Erteilung des Arbeitsbefehles "HLZ-Zuschnitte Zuführen" verfährt der Roboter in die geforderte Position und vermißt zunächst die HLZ-Höhenlage sowie ihre Position- und Winkellage mit Hilfe von als solchen bekannten Lasern für die X- und Y-Koordinaten und mittels eines Höhensensors. Nachdem diese Positionen der HLZ-Stapel vermessen worden sind, werden die Werte in der zentralen Robotersteuerung zwischengespeichert. Nach der Aufnahme der aktuellen HLZ-Lagedaten in die zentrale Robotersteuerung verfährt der Roboter zwecks Ausnahme des Werkzeugs A zu dessen Ablageposition und erfaßt das Werkzeug. Nach der Aufnahme verfährt der Roboter in die abgespeicherte aktuelle HLZ-Position zum Aufnehmen und Transportieren von HLZ-Stapeln mit Hilfe des Werkzeugs A.

Gemäß Fig. 4 weist das Werkzeug A ein zylinderförmiges, topfartiges Anschlußteil auf, das als Spann- und Zentrierring 2 ausgeführt ist und integrierte pneumatische Steckkupplungsstücke 3 aufweist, mit denen im eingekuppelten Zustand mit dem das Werkzeug A tragenden Robotarm 18 eine druckdichte Anschlußverbindung zu den in der Haltevorrichtung 36 angeordneten Gegenstücken hergestellt ist. Nach dieser Zentrierung und der Verriegelung der Steckkupplungsstücke 3 mit den zugeordneten, an der Haltevorrichtung 36 vorgesehenen Gegenstücken drückt ein Dreibackenfutter F der Haltevorrichtung 36 gegen die Innenfläche des Spann- und Zentrierringes 2 und fixiert somit die Haltevorrichtung 36 form- und/oder kraftschlüssig am Werkzeug A. Darüberhinaus sind zur sicheren Ankupplung der Haltevorrichtung 36 des Robotarmes 18 an den Spann- und Zentrierring 2 Zentrierstifte 14 von denen nur einer gezeigt ist, vorgesehen, die sich zur Führung der am Robotarm 18 befindlichen Haltevorrichtung im und über den Rand des zylindrischen Spann- und Zentrierringes 2 hinaus erstrecken.

Der zylindrische Spann- und Zentrierring 2 ist mit seinen pneumatischen Stockkupplungsstücken 3 und den Zentrierstiften 14 an einer Grundplatte 1 so befestigt, daß an der der Befestigungsseite für den Spann- und Zentrierring 2 gegenüberliegenden Seite der Grundplatte 1 flexible Leitungen 4 angebracht sind. Darüberhinaus sind an der Unterseite der Grundplatte 1 drei Saugplattenkonsolen 10 befestigt, die jeweils eine Saugplatte 11 mit jeweils zwölf Saugköpfen 12 tragen und in deren Innerem gefederte Stiftbolzen angeordnet sind. An die Saugplatten 11 ist jeweils eine flexible Leitung 4 angeschlossen. Die Saugplattenkonsolen 10 tragen jeweils in einer senkrecht zur Ausdehnungsrichtung der Saugplatten 11 verlaufenden Richtung ein Führungsteil 9 mit Spezialflachführung und Rollenumlaufbock einschließlich eines Anschlages. Die Führungsteile 9 sind an der Konsole 5 befestigt, die außerdem eine Vorrichtung zum Untergreifen der mittels der Saugköpfe 12 angehobenen HLZ-Stapel aufweist. Diese in der Konsole 5 angeordnete Vorrichtung umfaßt einen Betätigungshebel 16 mit einer Rolle 20 an dessen freien Ende, eine Schubstange 6 mit an beiden Enden befindlichen Unibalköpfen 17, eine Rückholfeder 15, ein Zahnradvorgelege 7 mit zwei miteinander in Eingriff befindlichen Zahnrädern 34,35, eine Betätigungswelle 8 mit drei Untergreiffingern 13, sowie einen Lagerbock der Welle 8. Dabei sitzt das Zahnrad 35 auf der Welle 8 und kämmt mit dem Zahnrad 34, das mit der Schubstange 6 verbunden ist.

Nach Aufsetzen der Saugköpfe 12 des Werkzeugs A auf die HLZ-Stapel werden diese angesaugt und aus dam Setzmuster der Stapelpalette freigefahren. Danach wird durch Absenken einer an dem Robotarm 18 befindlichen Ausschieberbrille 33, an der die Rolle 20 für die Aktivierung der Untergreifvorrichtung anliegt, der Betätigungshebel 16 nach unten gedrückt, so daß die Schubstange mit den Unibalköpfen 17 entgegen der Kraft der Rückholfeder 15 nach oben bewegt wird und gleichzeitig ein Drehen des Zahnradvorgeleges 7 erfolgt. Da sich das Zahnrad im Eingriff mit einem auf der Betätigungswelle 8 befindlichen Zahnrad 35 befindet, wird bei Drehung des Zahnrades 34 (in Fig. 4 im Uhrzeigersinn) die Betätigungswelle 8 ebenfalls gedreht. An der Betätigungswelle sind die Untergreiffinger 13 derart befestigt, daß sie bei vertikalem Bewegen der Schubstange 6 durch Betätigung des Betätigungshebels 16 mittels der Ausschieberbrille 33 um 180° zwischen einer Ruhelage, in welcher sie außer Anlage an dem Boden des HLZ-Stapels sind, und einer Arbeitslage schwenkbar sind, in welcher sie einen Teil des Stapelbodens abstützen und somit zum Festhalten des Stapels an jeder Saugplatte beitragen.

Mit Hilfe dieser Untergreiffinger 13 erfolgt also die Lagesicherung der HLZ-Stapel durch zusätzliches Untergreifen und Einspannen in Z-Richtung gegen die Saugplatten 11 im letzten Drittel der Zuschnitte. Mit Hilfe der üntergreiffinger 13 können zusätzlich Stapelhöhentoleranzen automatisch ausgeglichen und auf Unterkante Stapel in Niveau gebracht werden.

Die Üntergreiffinger 13 des Werkzeuges sind ferner so gestaltet, daß das Werkzeug bei minimalem Palettenabstand von 200 mm zwischen den Paletten mit Ladung eintauchen kann.

Die drei Saugplatten 11 sind einzeln axial verschiebbar federnd aufgehängt. Die Untergreifvorrichtung kann also fertigungsbedingte Stapelhohenunterschiede überbrücken. Die drei Saugplatten 11 mit jeweils zwölf Saugköpfen 12 des Werkzeugs sind einzeln pneumatisch gesteuert, so daß die Saugplatten 11 unabhängig voneinander Zuschnittstapel aufnehmen können oder nicht.

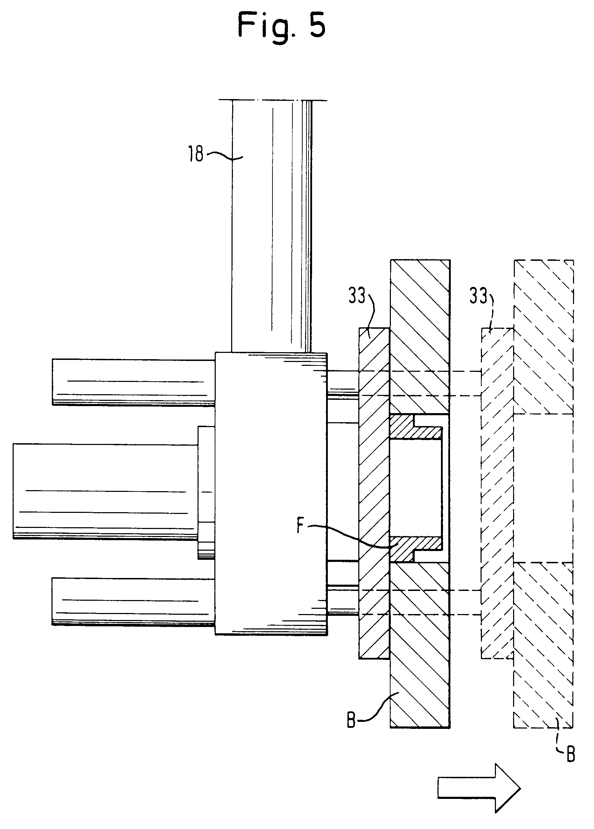

Fig. 5 dient dazu, aufzuzeigen, wie der Arbeitskopf des Flächenportalroboters zum Greifen und Abschieben von Bobinen verwendet wendet werden kann. Am Robotarm 18 ist im Dreibackenfutter F die Bobine B an ihrer inneren Zylinderfläche aufgespannt. Nach dem Lockern der Aufspannung durch das Dreibackenfutter F schiebt die Ausschieberbrille 33, die gemäß Fig. 4 auch den Betätigungshebel 16 der Untergreifvorrichtung betätigen kann, die Bobine vom Arbeitskopf des Flächenportalroboters in Pfeilrichtung ab und kann sie so auf einen (nicht dargestellten) Bobinenwechsler plazieren. Hier werden noch einmal die vielfältige Einsatz- und Verwendungsmöglichkeiten der Einzelbauteile des Arbeitskopfes des Flächenportalroboters deutlich.

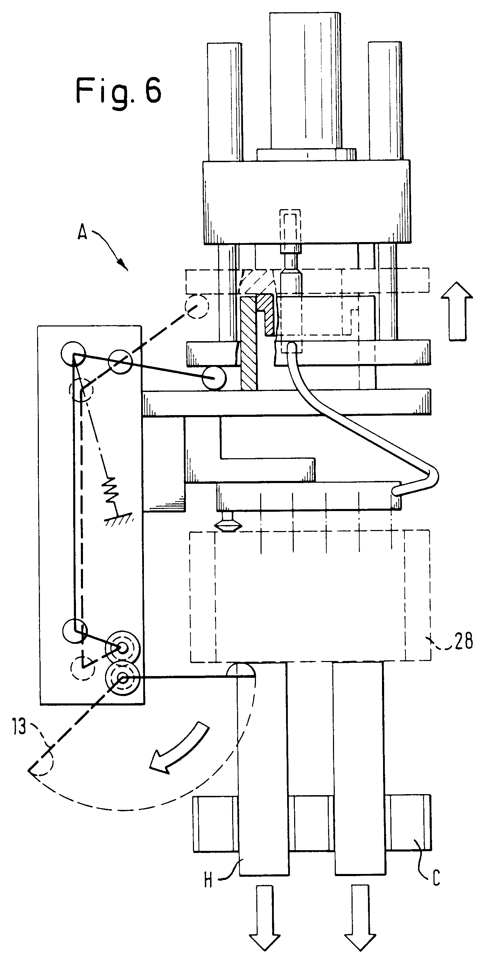

Die Fig. 6 zeigt schematisch einen Arbeitskopf des Flächenportalroboters, der, wie auch in Fig. 4 dargestellt, mit einem Werkzeug einen Kartonzuschnittstapel ansaugt und untergreift. Aus der Darstellung dieser Figur 6 wird ersichtlich, wie der HLZ-Stapel 28 auf einen Hubtisch H über einem Ablageband C abgelegt wird, wobei die Untergreifvorrichtung 13 nach dem Ablegen wegklappt und die Saugköpfe den HLZ-Stapel freigeben, worauf der Hubtisch nach unten wegfährt, bis der Kartonzuschnittstapel auf dem Ablageband C zu liegen kommt und weitertransportiert wird.

## Patentansprüche

1. Robotarm (18) eines Flächenportalroboters,
a) mit einem Arbeitskopf (22),
b) der in drei lineare Richtungen und um zwei Drehachsen bewegbar ist, und
c) mit einem an dem Arbeitskopf (22) vorgesehenen Werkzeug (A) zum Erfassen von banderolierten Stapeln (K) flacher Kartonzuschnitte mittels einer auf der Oberseite des Stapels aufgesetzten, an einer Unterdruckquelle angeschlossenen Saugvorrichtung (11, 12) und einer schwenkbaren Untergreifvorrichtung (13),
**gekennzeichnet durch** die folgenden Merkmale:
d) die mechanische Kopplung zwischen dem Arbeitskopf (22) und dem hiervon trennbaren Werkzeug (A) erfolgt über ein an dem Arbeitskopf (22) vorgesehenes Mehrbackenfutter (F), welches eine Zylinderfläche (2) des Werkzeugs (A) ergreift;
e) bei der mechanischen Kopplung zwischen dem Arbeitskopf (22) und dem Werkzeug (A) erfolgt der Anschluß der Saugvorrichtung (11, 12) an der Unterdruckquelle mittels über flexible Leitungen (4) mit dieser verbundene Steckkupplungen (3); und
f) eine am Arbeitskopf (22) vorgesehene Schubvorrichtung (33) die über eine Hebelvorrichtung (16, 6, 7, 34) die Untergreifvorrichtung (13) des Werkzeugs (A) betätigt.

2. Robotarm nach Anspruch 1, dadurch gekennzeichnet, daß das Mehrbackenfutter (F) ein zur Aufnahme von Bobinen (B) geeignetes innengreifendes Futter ist.

3. Robotarm nach einem der Ansprüche 1 oder 2, dadurch gekennzeichnet, daß die Schubvorrichtung (33) eine zum Abschieben von Bobinen geeignete Ausschiebebriile (33) ist.

4. Robotarm nach einem der Ansprüche 1 bis 3, dadurch gekennzeichnet, daß die Kopplung des Arbeitskopfes (22) mit dem Werkzeug durch eine form- und/oder kraftschlüssige Verbindung zwischen dem Mehrbackenfutter (F), insbesondere einem Dreibackenfutter, und einem Hohlzylinder (2) am Werkzeug (A) erfolgt.

5. Robotarm nach einem der Ansprüche 1 bis 4, dadurch gekennzeichnet, daß das Werkzeug (A) einen an einer Grundplatte (1) befestigten Spann- und Zentrierring (2) mit mindestens zwei Zentrierstiften (14) aufweist, und daß die Grundplatte (1) an einer die Hebelvorrichtung zur Betätigung der Untergreifvorrichtung (13) aufnehmenden Konsole (5) befestigt ist.

6. Robotarm nach einem der Ansprüche 1 bis 5, dadurch gekennzeichnet, daß die Saugvorrichtung elastisch mit relativ großem Spiel gelagerte Saugköpfe (12) aufweist.

7. Robotarm nach einem der Ansprüche 1 bis 6, dadurch gekennzeichnet, daß die Saugvorrichtung zur Aufnahme von drei Stapeln von Kartonzuschnitten (K) drei jeweils mit Steckkupplungen (3) versehene Saugplatten (11) mit jeweils mehreren Saugköpfen (12) aufweist, die einzeln durch Unterdruck ansteuerbar sind.

8. Robotarm nach einem der Ansprüche 1 bis 7, dadurch gekennzeichnet, daß zum Untergreifen der drei Stapel von Kartonzuschnitten (K) für jeden Stapel jeweils eine einzeln ansteuerbare Untergreifvorrichtung (13) am Werkzeug (A) vorgesehen ist.

9. Robotarm nach einem der Ansprüche 7 oder 8, dadurch gekennzeichnet, daß die Saugplatten (11) und die Untergreifvorrichtungen (13) entsprechend der Größe der zu handhabenden Stapel (K) gegeneinander horizontal verschiebbar sind.

10. Robotarm nach einem der Ansprüche 1 bis 9, dadurch gekennzeichnet, daß die Untergreifvorrichtung (13) auf einer an der Konsole (5) drehbar gelagerten Betätigungswelle (8) sitzt, die über ein Zahnradvorgelege (7) mit einer Schubstange (6) gekoppelt ist, und daß die Schubstange (6) an einem Betätigungshebel (16) angelenkt ist.

11. Robotarm nach Anspruch 10, dadurch gekennzeichnet, daß der Betätigungshebel (16) an seinem freien Ende eine Rolle (20) aufweist, über welche er von der Schubvorrichtung (33), die parallel zu der Längsachse des Robotarms (18) verschiebbar ist, betätigt wird und damit auch die Untergreifvorrichtung (13) aus der Ruhelage in die Arbeitslage bewegbar ist, in welcher die Rolle (20) auf der Grundplatte (1) anliegt.

12. Robotarm nach einem der Ansprüche 10 oder 11, dadurch gekennzeichnet, daß das Zahnradvorgelege ein Zahnrad (34) aufweist, welches mit einem auf der Betätigungswelle (8) sitzenden zweiten Zahnrad (35) kämmt und mit der Schubstange (6) verbunden ist.

13. Robotarm nach einem der Ansprüche 1 bis 12, dadurch gekennzeichnet, daß die Untergreifvorrichtung (13) eine rechteckige Platte ist.

## Claims

1. Robot arm (18) of an area-covering gantry robot,
a) having a working head (22),
b) which is movable in three linear directions and about two axes of rotation, and
c) having a tool (A), provided on the working head (22), for grasping banded stacks (K) of flat cardboard blanks by means of a suction device (11, 12), placed on the upper side of the stack and connected to a low-pressure source, and a pivotable gripping-under device (13),
characterised by the following features:
d) the mechanical coupling between the working head (22) and the tool (A) separable therefrom is effected by way of a multi-jaw chuck (F) which is provided on the working head (22) and grips a cylindrical surface (2) of the tool (A);
e) in the case of the mechanical coupling between the working head (22) and the tool (A), the suction device (11, 12) is connected to the low-pressure source by means of plug-in couplings (3) connected to said suction device by way of flexible lines (4); and
f) a pushing device (33) which is provided on the working head (22) and actuates the gripping-under device (13) of the tool (A) by way of a lever device (16, 6, 7, 34).

2. Robot arm according to Claim 1, characterised in that the multi-jaw chuck (F) is an internally gripping chuck suitable for picking up reels (B).

3. Robot arm according to either of Claims 1 and 2, characterised in that the pushing device (33) is an annular pusher (33) suitable for pushing off reels.

4. Robot arm according to one of Claims 1 to 3, characterised in that the coupling of the working head (22) to the tool is effected by a positive and/or non-positive connection between the multi-jaw chuck (F), in particular a three-jaw chuck, and a hollow cylinder (2) on the tool (A).

5. Robot arm according to one of Claims 1 to 4, characterised in that the tool (A) has a clamping and centring ring (2), which is fastened to a base plate (1) and has at least two centring pins (14), and in that the base plate (1) is fastened to a bracket (5) accommodating the lever device for the actuation of the gripping-under device (13).

6. Robot arm according to one of Claims 1 to 5, characterised in that the suction device has suction heads (12) resiliently mounted with a relatively large amount of play.

7. Robot arm according to one of Claims 1 to 6, characterised in that the suction device has three suction plates (11), which are each equipped with plug-in couplings (3) and each have a plurality of suction heads (12) individually drivable by low pressure, for picking up three stacks of cardboard blanks (K).

8. Robot arm according to one of Claims 1 to 7, characterised in that, for gripping under the three stacks of cardboard blanks (K), for each stack a respective individually drivable gripping-under device (13) is provided on the tool (A).

9. Robot arm according to either of Claims 7 and 8, characterised in that the suction plates (11) and the gripping-under devices (13) are horizontally displaceable relative to one another in accordance with the size of the stacks (K) to be handled.

10. Robot arm according to one of Claims 1 to 9, characterised in that the gripping-under device (13) is seated on an actuating shaft (8), which is rotatably mounted on the bracket (5) and is coupled to a connecting rod (6) by way of a gear train (7), and in that the connecting rod (6) is articulated on an actuating lever (16).

11. Robot arm according to Claim 10, characterised in that the actuating lever (16) has at its free end a roller (20), by way of which it is actuated by the pushing device (33), displaceable parallel to the longitudinal axis of the robot arm (18), and consequently also the gripping-under device (13) is movable from the rest position to the working position, in which the roller (20) rests on the base plate (1).

12. Robot arm according to either of Claims 10 and 11, characterised in that the gear train has a gear wheel (34) which meshes with a second gear wheel (35) seated on the actuating shaft (8) and is connected to the connecting rod (6).

13. Robot arm according to one of Claims 1 to 12, characterised in that the gripping-under device (13) is a rectangular plate.

## Revendications

1. Bras de robot (18) d'un robot sur portique plan,
a) comprenant une tête de travail (22),
b) qui est mobile dans trois directions linéaires et autour de deux axes de rotation, et
c) comprenant un outil (A) prévu sur la tête de travail (22), pour saisir des piles ficelées (K) de flans découpés plats de carton, au moyen d'un dispositif d'aspiration (11, 12) raccordé à une source de dépression et appliqué sur la face supérieure de la pile, et d'un dispositif de soutien inférieur pivotant (13),
**caractérisé** par les particularités suivantes:
d) l'accouplement mécanique entre la tête de travail (22) et l'outil (A) pouvant en être séparé, est effectué par l'intermédiaire d'un mandrin de serrage à mors multiples (F) prévu sur la tête de travail (22) et saisissant une surface cylindrique (2) de l'outil (A);
e) lors de l'accouplement mécanique entre la tête de travail (22) et l'outil (A), est effectué le raccordement du dispositif d'aspiration (11, 12) à la source de dépression, au moyen de raccords à emboîtement (3) reliés à cette source de dépression par des conduites flexibles (4); et
f) un dispositif de poussée (33) prévu sur la tête de travail (22), qui actionne le dispositif de soutien inférieur (13) de l'outil (A), par l'intermédiaire d'un mécanisme à leviers (16, 6, 7, 34).

2. Bras de robot selon la revendication 1, **caractérisé** en ce que le mandrin à mors multiples (F) est un mandrin à préhension intérieure, adapté pour recevoir des bobines (B).

3. Bras de robot selon l'une des revendications 1 ou 2, **caractérisé** en ce que le dispositif de poussée (33) est une lunette d'éjection (33) adaptée pour l'éjection de bobines.

4. Bras de robot selon l'une des revendications 1 à 3, **caractérisé** en ce que l'accouplement de la tête de travail (22) à l'outil s'effectue par une liaison par complémentarité de formes et/ou par adhérence entre le mandrin à mors multiples (F), notamment un mandrin à trois mors, et un cylindre creux (2) sur l'outil (A).

5. Bras de robot selon l'une des revendications 1 à 4, **caractérisé** en ce que l'outil (A) comprend un anneau de centrage et de serrage (2) fixé à une plaque de base (1) et comportant au moins deux chevilles de centrage (14), et en ce que la plaque de base (1) est fixée à une console (5) recevant le mécanisme à leviers destiné à actionner le dispositif de soutien inférieur (13).

6. Bras de robot selon l'une des revendications 1 à 5, **caractérisé** en ce que le dispositif d'aspiration comprend des têtes d'aspiration (12) montées de manière élastique avec un jeu relativement grand.

7. Bras de robot selon l'une des revendications 1 à 6, **caractérisé** en ce que le dispositif d'aspiration, pour saisir trois piles (K) de flans découpés de carton, comprend trois plaques d'aspiration (11) pourvues chacune de raccords à emboîtement (3), et dont chacune comporte plusieurs têtes d'aspiration (12) qui peuvent être commandées individuellement en dépression.

8. Bras de robot selon l'une des revendications 1 à 7, **caractérisé** en ce que pour soutenir par le dessous les trois piles (K) de flans découpés de carton, il est prévu sur l'outil (A), pour chaque pile, un dispositif de soutien inférieur respectif (13) pouvant être commandé individuellement .

9. Bras de robot selon l'une des revendications 7 ou 8, **caractérisé** en ce que les plaques d'aspiration (11) et les dispositifs de soutien inférieur (13) peuvent être déplacés horizontalement les uns par rapport aux autres, conformément à la taille des piles (K) à manipuler.

10. Bras de robot selon l'une des revendications 1 à 9, **caractérisé** en ce que le dispositif de soutien inférieur (13) est calé sur un arbre d'actionnement (8) monté en rotation sur la console (5), qui est couplé à une tige de poussée (6) par l'intermédiaire d'un train d'engrenages (7), et en ce que la tige de poussée (6) est articulée à un levier d'actionnement (16).

11. Bras de robot selon la revendication 10, **caractérisé** en ce que le levier d'actionnement (16) comporte, à son extrémité libre, un galet (20) par l'intermédiaire duquel il est actionné par le dispositif de poussée (33) qui peut coulisser parallèlement à l'axe longitudinal du bras de robot (18), en déplaçant ainsi également le dispositif de soutien inférieur (13) de la position de repos dans la position de travail dans laquelle le galet (20) s'applique sur la plaque de base (1).

12. Bras de robot selon lune des revendications 10 ou 11, **caractérisé** en ce que le train d'engrenages comprend une roue dentée (34) qui engrène avec une seconde roue dentée (35) calée sur l'arbre d'actionnement (8), et qui est reliée à la tige de poussée (6).

13. Bras de robot selon l'une des revendications 1 à 12, **caractérisé** en ce que le dispositif de soutien inférieur (13) est une plaque rectangulaire.
